# EUROPEAN PATENT SPECIFICATION

(11) **EP 4 361 980 B1**
(45) Date of publication and mention of the grant of the patent: **20.08.2025**
(21) Application number: 23202292.1
(22) Date of filing: 09.10.2023
(51) Int. Cl.: G07F 11/24, G07F 11/44, G07F 11/52, G07F 17/00

(54) **METERED FOOD DISPENSER WITH SINGLE MOTOR ACTUATED WEIGHING AND DISPENSING MECHANISMS**
SPENDER FÜR ABGEMESSENE NAHRUNGSMITTEL MIT DURCH EINEN EINZIGEN MOTOR BETÄTIGTEN WIEGE- UND AUSGABEMECHANISMEN
DISTRIBUTEUR DOSEUR D'ALIMENTS AVEC MÉCANISMES DE PESAGE ET DE DISTRIBUTION ACTIONNÉS PAR UN MOTEUR UNIQUE

(30) Priority: 31.10.2022 US 202263420781 P
(43) Date of publication of application: 01.05.2024
(73) Proprietor: Franke Technology and Trademark Ltd, 6052 Hergiswil (CH)
(72) Inventor: Prusinowski, Mateusz, 10-692 Olsztyn (PL); Czapp, Ireneusz, 84-240 Reda (PL); Chmayssani, Khalil, Nolensville 37135 (US); Ormanin, Marek, 81-198 Suchy Dwor (PL)
(74) Representative: LBP Lemcke, Brommer & Partner Patentanwälte mbB

(56) References cited:
- CN-U- 213 239 131
- CN-U- 213 239 132
- US-A1- 2006 113 324
- US-A1- 2011 101 022

## Description

### CROSS-REFERENCE TO RELATED APPLICATIONS

This application claims the benefit of U.S. Provisional Application No. 63/420,781, filed October 31, 2022.

### TECHNICAL FIELD

The present invention relates to the field of metered food dispensers that dispense a metered quantity of food product from a hopper. More particularly, the invention relates to a dispenser for frozen food, which can be, for example, French fries, that are dispensed from a bulk storage hopper in metered batch sizes to a fry basket.

### BACKGROUND

Applicant has developed and markets metered food dispensers, particularly for frozen foods such as French fries or chicken nuggets, that dispense bulk food product from a storage hopper into a receptacle, such as a fry basket. A product dispenser of the applicant is described for example in US2006/0113324 A1. The frozen food is dispensed in specific metered quantities as the amount of the frozen food that is dispensed at one time can affect quality of the finished (cooked) food product, for example, based on the temperature change imparted by the food product to the cooking oil as well as the necessary fry time in the cooking oil. Currently, the frozen food product is removed from a bottom of the storage hopper via a rotating drum having paddles or fins on a periphery thereof by rotating the drum so that the food product that is released/displaced by the paddles fall onto a weighing/dispensing assembly, and when the appropriate weight of food product is detected by the weighing/dispensing assembly, the rotation of the drum stops, and the accumulated food product that was dispensed is delivered to the receptacle, for example, the fry basket.

In the known equipment, the weighing/dispensing assembly includes or is connected to one or more dump doors on which the dispensed food product accumulates. A first motor operates these dump doors to open when the appropriate amount of food product is accumulated in order to dispense a metered amount or batch of food product. Additionally, the dump doors are supported via a support assembly that is movable into and out of contact with a load cell that forms part of the weighing/dispensing assembly in order to determine the weight of the product that has been dispensed onto the dump doors. Here, a second motor is used to move the support assembly relative to the load cell so that the weight of the support assembly and the dump doors is not constantly on the load cell when the dispenser is not in active use.
CN213239131U shows weighing and dispensing mechanism of the applicant with a food container, a motor to open and close a discharge port of the food container, and a moving part that moves the food container in contact with a load cell.
CN213239132U shows another weighing and dispensing mechanism of the applicant. A drive motor opens and closes a pair of weighing doors, which are connected to a movable block that exerts downward pressure onto a load cell.
A food dispensing apparatus with a refrigerated cabinet, a hopper, an accumulator assembly, a weighing system, and a flap door is also known from US2011/101022A1.

Although the known arrangement has been very successful in operation, it would be desirable to maintain or improve the function and reliability of the system while reducing cost.

### SUMMARY

The present disclosure is directed to a product dispenser, preferably for frozen food product, having a storage hopper, a rotatable drum having paddles on a periphery thereof located at a bottom of the storage hopper, and a drive motor connected to the rotatable drum. Rotation of the drum causes the paddles to engage with and move product from the open bottom of the hopper to a position in the drum housing where the product can then fall through the open bottom of the drum housing. A weighing/dispensing assembly is located beneath the rotatable drum and includes a load cell and further includes or is connected to one or more dump doors on which product to be dispensed is adapted to accumulate. The one or more dump doors are connected to a support assembly that is movable into and out of contact with the load cell. A single weighing/dispensing motor drives a gearbox that includes an actuator shaft such that upon rotation of the actuator shaft in a first direction, the support assembly is raised out of contact with the load cell and the one or more dump doors are opened such that accumulated product is dispensed. Upon rotation of the actuator shaft in a second, opposite direction, the one or more dump doors are closed, and upon further rotation, the support assembly moves into contact with the load cell. The dispenser is then in a position to receive a next batch of food product from the hopper.

A controller is provided and is configured to actuate the drive motor to rotate the rotatable drum at a start of a dispensing cycle, and to receive a signal from the load cell and determine a weight of the product accumulating on the dump doors. The controller is further configured to deactivate the drive motor upon a target weight being detected, and to activate the single weighing/dispensing motor to drive the actuator shaft in the first direction to raise the support assembly out of contact with the load cell and open the one or more dump doors such that accumulated product is dispensed. The controller is then configured to activate the single weighing/dispensing motor to rotate the actuator shaft in the second direction to close the one or more dump doors. The controller is further configured to activate the single weighing/dispensing motor to further rotate the actuator shaft in the second direction to move the support assembly back into contact with the load cell upon a new dispensing cycle being initiated.

In another aspect, the product dispenser includes an actuating arm connected to the actuator shaft, and the one or more dump doors are connected to one or more rotatable support shafts that are supported by the support assembly, and the actuating arm contacts a lever connected to at least one of the one or more rotatable support shafts to open the one or more dump doors as the single weighing/dispensing motor drives the actuator shaft in the first direction.

In a preferred arrangement, the one or more dump doors include first and second ones of the dump doors that are connected to respective first and second ones of the rotatable support shafts, and a linkage arm extends between the lever connected to the first rotatable shaft and a second lever connected to the second rotatable shaft, such that as the actuating arm contacts the lever connected to the first rotatable support shaft to open the first dump door, the linkage arm acts on the second lever to open the second dump door.

In one preferred aspect of the product dispenser, the support assembly is slidably mounted on guides affixed to a mounting plate, and the mounting plate includes elongated openings through which the one or more rotatable support shafts extend. The elongated openings allow enough space for upward and downward travel of the rotatable support shafts as the support assembly is moved up and down as part of the dispensing and weighing cycle in order to discharge a specific amount of food product.

In a preferred embodiment, a lifting cam is connected to the actuator shaft, and the lifting cam is configured to raise the support assembly as the single weighing/dispensing motor drives the actuator shaft in the first direction. This removes the combined weight of the support assembly, rotatable support shaft(s), dump door(s), and product that is accumulated on the dump door(s) from the load cell prior to opening the dump doors to discharge the product accumulated thereon.

Further, the lifting cam is configured to lower the support assembly as the single weighing/dispensing motor drives the actuator shaft in the second direction. This is done at the start of a next dispensing cycle so that the load cell is not under load when the product dispenser is not in use.

Preferably, the lifting cam is configured to come out of contact with the support assembly as the support assembly reaches a weighing position in contact with the load cell.

In another aspect, the product dispenser includes a position indicator connected to the actuator shaft and a sensor that detects a position of the position indicator and signals the controller. This is used so that the controller can detect a position of the actuator shaft before or during each dispensing cycle. The position sensor is a break-beam sensor, and the position indicator is a "flag" connected to the actuator shaft.

In a preferred application, the product dispenser is for dispensing frozen food product, such as French fires of chicken nuggets into a fry basket that is arranged below the dump doors. A refrigerated housing surrounds the hopper and the rotatable drum. Placement of the fry basket below the dispenser activates a dispensing cycle by the fry basket pressing a switch or otherwise being detected, which signals the controller to begin a dispensing cycle. The dispensing cycle can include:
Activating the single weighing/dispensing motor by the controller to rotate the actuator shaft in the second direction to move the support assembly into contact with the load cell;
Actuating the drive motor to rotate the rotatable drum in order to deliver food product from the hopper to the one or more dump doors on the weighing/dispensing assembly;
Receiving a signal by the controller from the load cell and the controller determining a weight of the food product accumulating on the one or more dump doors;
Deactivating the drive motor by the controller upon a target weight being detected;
Activating the single weighing/dispensing motor by the controller to drive the actuator shaft in the first direction raising the support assembly out of contact with the load cell and opening the one or more dump doors such that accumulated food product is dispensed; and
Activating the single weighing/dispensing motor by the controller to rotate the actuator shaft in the second direction to close the one or more dump doors.

The various features noted above can be used alone or in various combination to provide for metered dispensing of food products in an accurate manner using a simplified weighing and dispensing arrangement.

### BRIEF DESCRIPTION OF THE DRAWINGS

Further advantages and characteristics of the invention will become apparent by the below description of embodiments making reference to the accompanying drawings, in which:
Figure 1 is a perspective view of a prior art product dispenser of the assignee of the general type referenced herein.
Figure 2 is a partial perspective view of the prior art product dispenser shown in Figure 1 illustrating two food storage hoppers with an arrow indicating where food is filed into the first hopper.
Figure 3 is a partial perspective view of the prior art product dispenser according to Figure 1 in which the two food hoppers shown in Figures 1 and 2 have been removed in order to provide a view of the rotatable drums with paddles or fins as well as associated drive motors that are individually activatable to rotate the drum associated with a specific hopper in order to remove food product from the open bottom end of the hopper and deliver the food product via an opening at the bottom of the drum housing to a respective weighing/dispensing assembly.
Figure 4 is an exploded assembly view in perspective showing a portion of one weighing/dispensing assembly in accordance with the prior art product dispenser shown in Figures 1-3 showing a dump door motor and gear box assembly used to actuate the dump doors, as well as a support assembly lift motor and gear box assembly used to lift a support assembly into and out of contact with a load cell, with the motor and gearbox assemblies being assembled to a mounting plate and/or a movable support assembly located thereon.
Figure 5 is a an exploded similar to Figure 4 in which additional components, including the rotatable shafts with associated dump doors as well as the levers and linkages that are acted upon by the dump door motor and gear box to discharge product from the dump doors are now shown.
Figure 6 is a perspective view showing a weighing/dispensing assembly for use in a product dispenser in accordance with the present disclosure.
Figure 7 is a perspective view of the weighing/dispensing assembly according to the present disclosure as shown in Figure 6, shown from the opposite side in which the single weighing/dispensing motor and associated gear box along with the levers that actuate the dump doors are shown in detail.
Figure 8 is a rear elevational view of the weighing/dispensing assembly shown in Figure 7. Here, the actuating arm is shown in a neutral position.
Figure 9 is a front elevational view of the weighing/dispensing assembly shown in Figures 6-8 in which the weighing/dispensing motor has rotated the lifting cam in the first direction to raise the support assembly out of contact with the load cell.
Figure 10 is a view similar to Figure 9 in which the lifting cam is rotated in a second direction into a position out of contact with the support assembly such that the weight of the support assembly is transferred to the load cell.

### DETAILED DESCRIPTION

Certain terminology is used in the following description for convenience only and is not limiting. The words "right," "left," "top," and "bottom" designate directions in the drawings to which reference is made. The words "a" and "one," as used in the claims and in the corresponding portions of the specification, are defined as including one or more of the referenced item unless specifically stated otherwise. This terminology includes the words above specifically mentioned, derivatives thereof, and words of similar import. The phrase "at least one" followed by a list of two or more items, such as "A, B, or C," means any individual one of A, B or C as well as any combination thereof. The terms approximately or generally mean within +/-10% of a specified value unless otherwise noted, and within +/- 25° of a specified angle or direction.

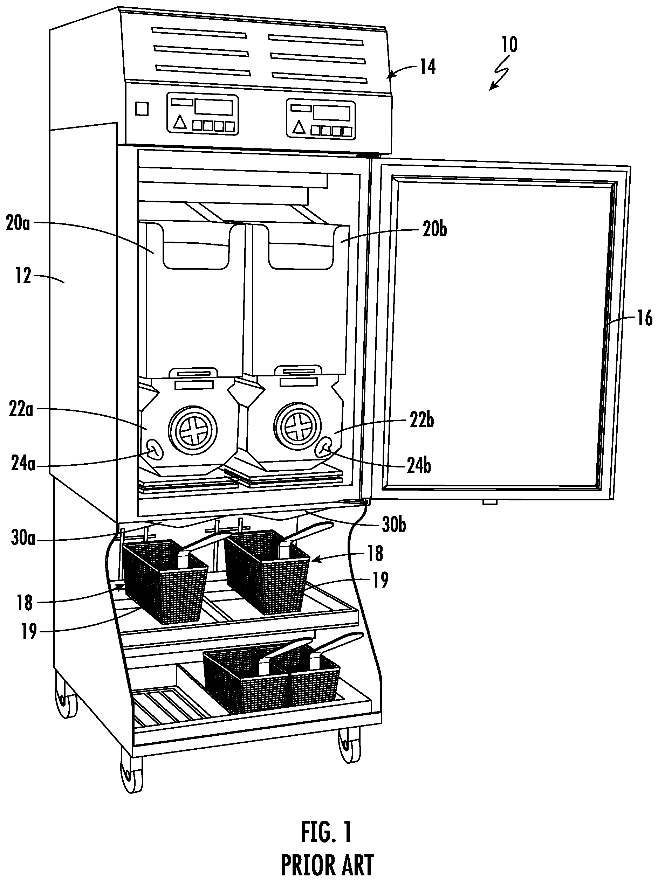

Referring to Figures 1-5, a prior art product dispenser 10, in particular a dispenser for frozen food such as french fries or chicken nuggets, is shown. The product dispenser 10 includes a housing 12 with a refrigeration unit 14 located on top of the housing 12 as well as an access door 16 to the refrigerated portion of the product dispenser 10. Product receiving spaces 18 are located beneath the enclosed area and are configured to receive a receptacle, such as a fry basket 19, into which a metered amount of product is to be dispensed.

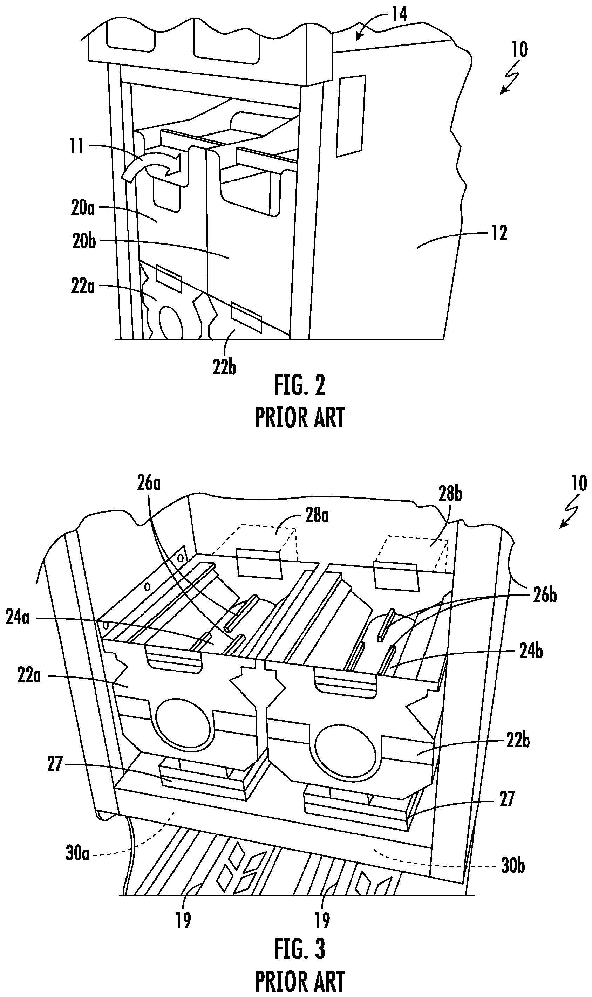

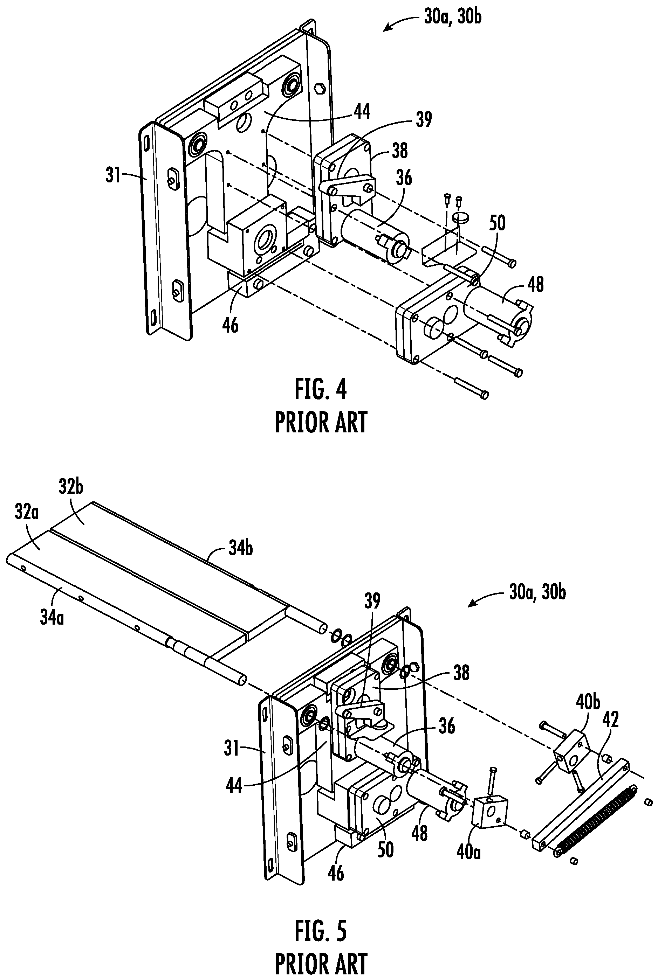

Still with reference to Figures 1-3, hoppers 20a, 20b are located within the refrigerated area and are assembled on top of drum housings 22a, 22b. Frozen food product (indicated by arrow 11 in Fig. 2) can be loaded into the hoppers 20a, 20b for metered dispensing. As shown in detail in Figure 3, rotatable drums 24a, 24b are located within the respective drum housings 22a, 22b. Flexible paddles or fins (these terms are used interchangeably herein) 26a, 26b are located on the rotatable drums 24a, 24b. Drive motors 28a, 28b, shown schematically, are individually activatable to rotate the respective associated rotatable drum 24a, 24b in order to move product from the open bottom end of the desired associated hopper 20a, 20b into the respective drum housings 22a, 22b so that the product can drop down on to the respective weighing/dispensing assembly 30a, 30b. These are indicated in Figures 1 and 3, and shown in detail in Figures 4 and 5. Boots 27 shown in Fig. 3 guide the food product 11 from the open bottom of the drum housings 22a, 22b to the weighing/dispensing assemblies 30a, 30b.

The weighing/dispensing assemblies 30a, 30b each include a mounting plate 31 that is connected to the housing 12. A support assembly 44 is slidably connected to the mounting plate 31 for up and down movement. Rotatable shafts 34a, 34b are rotatably supported in the support assembly 44 and respective dump doors 32a, 32b are connected to the respective rotatable shafts 34a, 34b. A dump motor 36 is mounted on the support assembly 44 and includes a dump motor gear box 38 that is connected to an actuator arm 39 that, upon activation of the dump door motor 36, is rotated into contact with a first dump door drive lever 40a, which can be connected via a linkage arm 42 to a second dump door drive lever 40b in order to activate and open the dump doors 32a, 32b. This is done when a specific product weight is accumulated on the dump doors 32a, 32b based on rotation of an associated one of the rotatable drums 24a, 24b moving product from the bottom of a respective one of the hoppers 28a, 28b so it falls through the respective drum housing 22a, 22b, on to the respective closed dump doors 32a, 32b.

In order to detect the weight of the product accumulated on the dump doors 32a, 32b, a load cell 46 is provided and is in contact with the support assembly 44 as the food product is accumulated on the dump doors 32a, 32b while the rotatable drum 24a or 24b is rotated by the respective drive motor 28a or 28b. Once the load cell detects 46 that the desired amount of food product is located on the dump doors 32a, 32b, rotation of the rotatable drum 24a or 24b is stopped and the dump door motor 36 is activated in order to open the dump doors 32a, 32b. In order to move the support assembly 44 out of contact with the load cell 46, a support assembly lift motor 48 is provided and is connected to a support assembly lift gear box 50. The support assembly lift motor 48 is activated in order to raise the support assembly 44 out of contact with the load cell 46 when the dispensing cycle is completed so that the load cell 46 is not loaded until a next dispensing cycle is initiated and the support assembly lift motor is activated to move the support assembly 44 into contact with the load cell 46.

This weighing/dispensing assembly 30a, 30b is complex and includes the dump door motor 36 and the dump door gear box 38 as well as the support assembly lift motor 48 and the support assembly lift gear box 50, all of which increase costs and complexity as well as require additional maintenance.

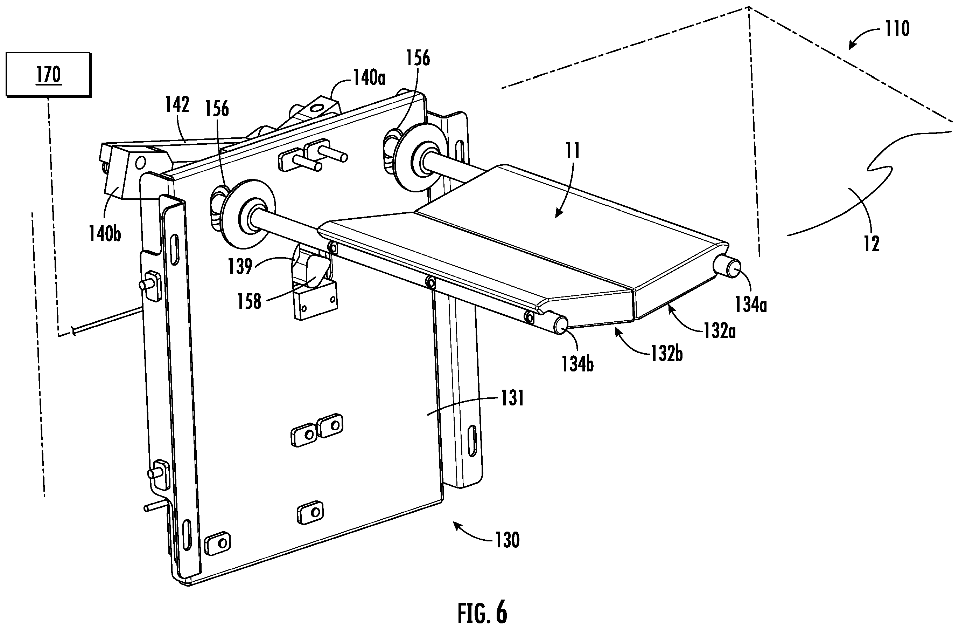

Referring to Figures 6-10, a product dispenser 110 in accordance with the present disclosure having the improved features discussed herein is described in detail. The product dispenser 110 is similar to the product dispenser 10 and the housing 12, refrigeration unit 14 as well as the access door 16 and fry basket receiving spaces 18 are as described above. Additionally, the hoppers 20a, 20b as well as the drum housings 22a, 22b and rotatable drums 24a, 24b are provided as described above in connection with the product dispenser 10. Drive motors 28a, 28b as described above for driving the rotatable drums 24a, 24b are also provided and are used to drive the respective rotatable drums 24a, 24b to engage with and move food product from the open bottom of a respective hopper 20a or 20b to a position in the drum housing 22a, 22b where the food product can then fall through the open bottom of the drum housing 22a, 22b. While the product dispenser is described with a two hopper arrangement as shown in Figure 1, it could also be a single hopper arrangement or include more than two hoppers.

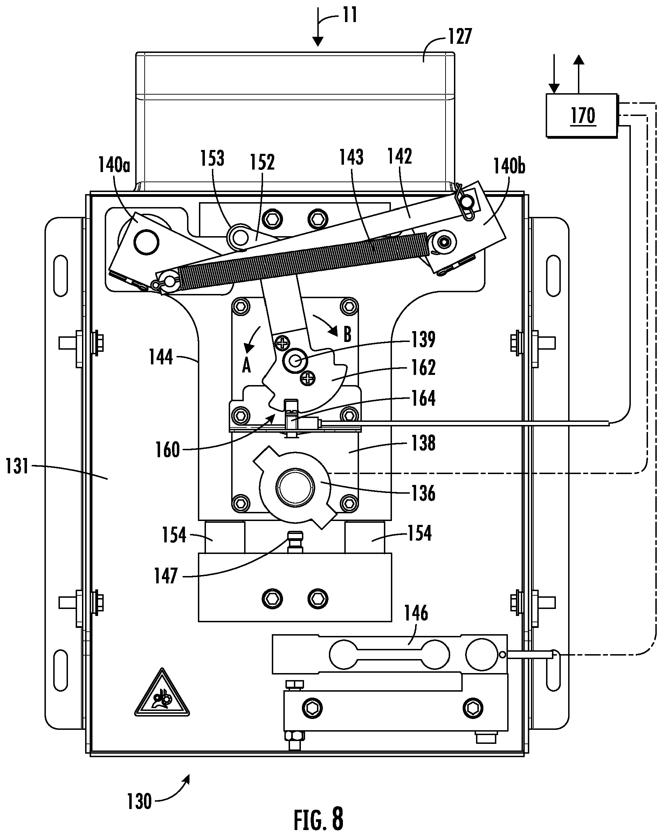

In accordance with the present disclosure, the weighing/dispensing assembly 130 is provided instead of each of each of the prior weighing/dispensing assemblies 30a, 30b. The weighing/dispensing assembly 130 that is used for each respective hopper/rotating drum in the dispenser 10 is shown in detail in Figures 6-10 and includes only a single weighing/dispensing motor 136. Here, the weighing/dispensing assembly 130 preferably includes a mounting plate 131 on which a support assembly 144 is mounted for slidable up and down movement as described further below. The mounting plate 131 can be connected to or supported on the housing 12. A weighing/dispensing assembly 130 further includes a load cell 146 and includes or is connected to one or more dump doors, in the present case two dump doors, 132a, 132b. Here, food product that is dispensed from the hopper via the rotatable drum is accumulated and weighed by the load cell 146. The dump door(s) 132a, 132b are connected to the support assembly 144, preferably by being mounted on respective rotatable shafts 134a, 134b that are rotatably supported in bearings 135 located in the support assembly 144. Figures 8 - 10 show the boot 127 that leads from the open bottom of the drum housings 24a, 24b to guide food product 11 being dispensed to the dump doors.

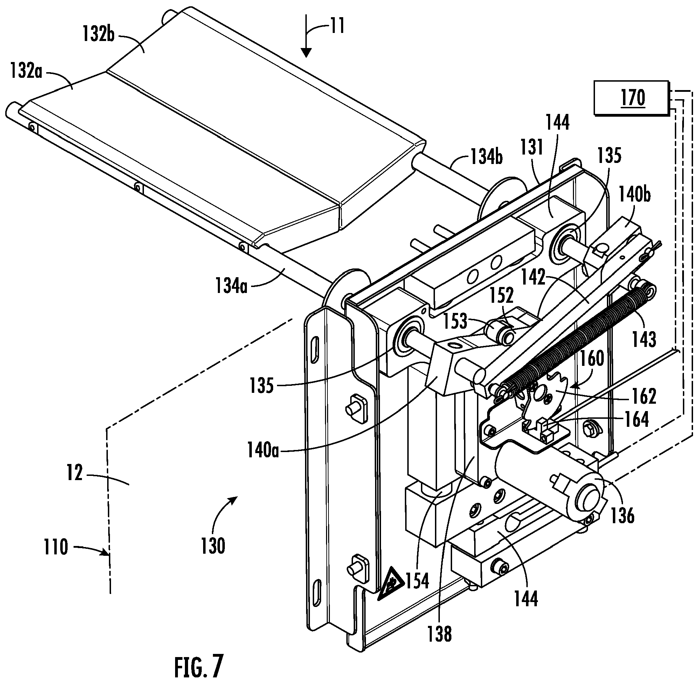

As shown in detail in Figures 7 and 8, the single weighing/dispensing motor 136 is connected to a weighing/dispensing gear box 138 from which an actuator shaft 139 extends. When the actuator shaft 139 is driven in a first direction A (shown in Fig. 8), the support arrangement 144 is raised out of contact with the load cell 146 and the one or more dump doors 132a, 132b are opened such that the accumulated food product is dispensed. Upon rotation of the actuator shaft 139 in a second, opposite direction B (shown in Fig. 8), the one or more dump doors 132a, 132b are closed. Upon further rotation, the support assembly 144 moves into contact with the load cell 146 so the next dispensing/weighing cycle can be carried out when a next batch of food product is dispensed from a respective one of the hoppers 20a, 20b.

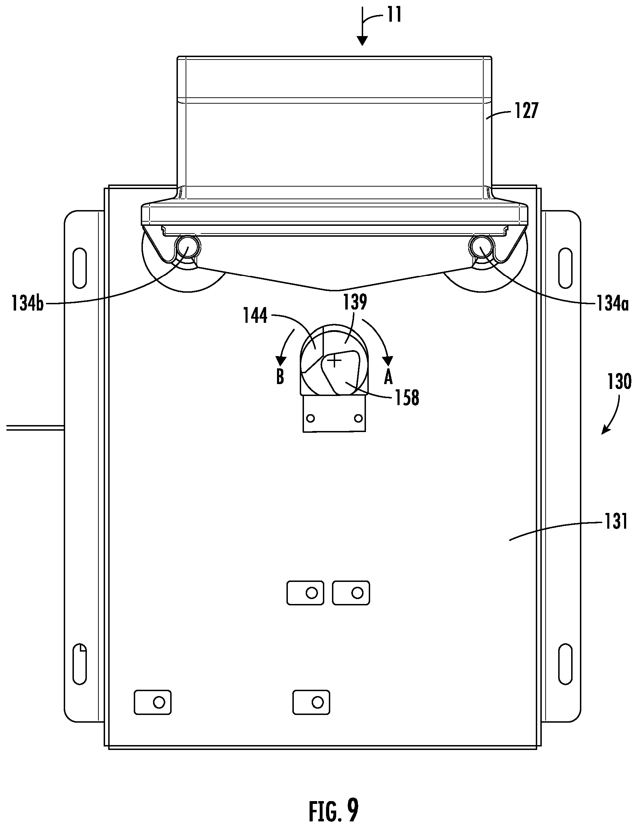

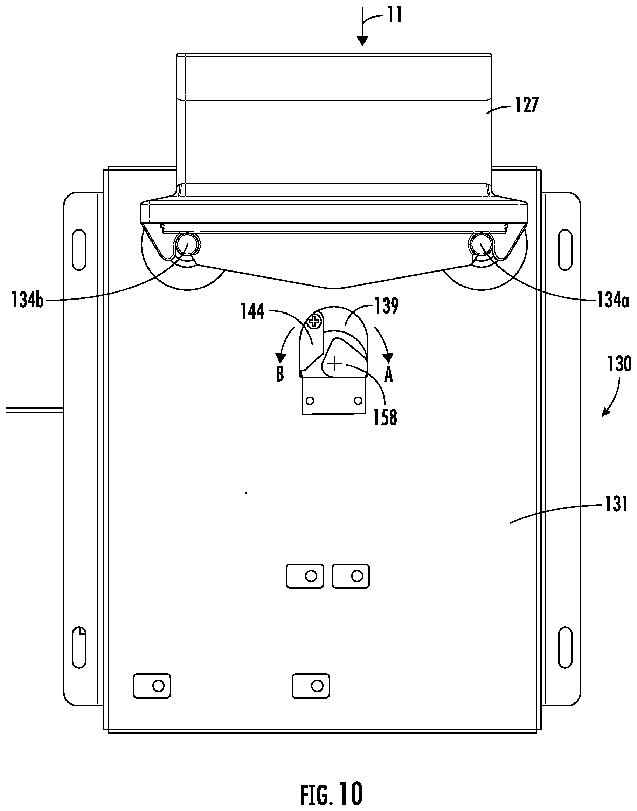

As shown schematically in Figures 6-8, a controller 170 is provided and is configured to actuate a drive motor 28a or 28b at a start of a dispensing cycle and is further considered to receive a signal from the load cell 146 in order to determine a weight of the food product accumulating on the dump doors 132a, 132b. The controller 170 is further configured to de-activate the drive motor 28a or 28b upon a target weight being detected and to activate the single weighing/dispensing motor 136 to drive the actuator shaft 139 via the gearbox 138 in the first direction to raise the support arrangement 144 out of contact with the load cell 146. Preferably, a lifting cam 158, shown in detail in Figures 9 and 10 is connected to the actuator shaft 139 and the lifting cam 158 is configured to raise the support assembly 144 as the single weighing/dispensing motor 136 drives the actuator shaft 139 in the first direction. This removes the combined weight of the support assembly 144, the rotatable support shafts 134a, 134b, the dump doors 132a, 132b, and the food product 11 that is accumulated on the dump doors 132a, 132b from the load cell 146 prior to the dump doors 132a, 132b opening to discharge the product accumulated thereon. In Figure 9, the lifting cam 158 is shown in the position lifting the support assembly 144 out of contact with the load cell 146. In Figure 10, the lifting cam 158 is shown in the disengaged position such that the support assembly 144 is in contact with the load cell 146 so that the weight of the product being dispensed can be determined.

The controller 170 is further configured to activate the single weighing/dispensing motor 136 to rotate the actuator shaft 139 in the second direction to close the one or more dump doors 132a, 132b once the product has been dispensed for example into the fry basket 19 or other receptacle, for example as shown in Figure 1. The controller 170 is further configured to activate the single weighing/dispensing motor 136 to rotate the actuator shaft 139 in the second direction to move the support assembly 144 back into contact with the load cell 146 upon a new dispensing cycle being initiated.

As shown in detail in Figures 7 and 8, the weighing/dispensing assembly 130 further includes an actuating arm 152 connected to the actuator shaft 139, and the one or more dump doors 132a, 132b are connected to the respective rotatable shafts 134a, 134b that are supported by the support assembly 144. The actuating arm 152 contacts a dump door lever 140a connected to one of the rotatable shafts 134a or 134b in order to open the dump door(s) 132a, 132b as the single weighing/dispensing motor 136 drives the actuator shaft 139 in the first direction. In a preferred embodiment, a roller 153 is provided at an end of the actuating arm 152 and contacts a surface of the dump door drive lever 140a.

In the case of two dump doors 132a, 132b, a second dump door drive lever 140b is connected to the second rotatable shaft 134b for the second dump door 132b. A linkage arm 142 extends between the dump door drive levers 140a, 140b such that upon the first dump door lever 140a being acted upon by the actuating arm 152, the linkage arm 142 also transfers the movement to the second dump door drive lever 140b such that the first and second dump doors 132a, 132b are opened at the same time. A return spring 143 assists in closing the dump doors 132a, 132b.

While the preferred embodiment of the weighing/dispensing assembly 130 includes two dump doors 132a, 132b, it is possible that only a single dump door 132a could be utilized, which would eliminate the need for the linkage arm 142 that extends to the second dump door drive lever 140b.

Still with reference to Figures 7 and 8, the support assembly 144 is preferably slidably mounted on guides on 154 so that it is constrained to move only up and down. The support assembly 144 can be lifted up by the lifting cam 158 so that it is out of contact with the load cell 146 or, if the lifting cam 158 is disengaged from the support assembly 144, the weight of the product being dispensed upon the dump doors 132a, 132b (along with the weight of the support assembly 144 and connected components) causes the support assembly 144 to move downwardly against the load cell 146. In a preferred embodiment, a weight transfer pin 147 is located between the load cell 146 and the support assembly 144.

As shown in Figure 6, elongated openings 156 are provided in the support plate 131 through which the one or more rotatable support shafts 134a, 134b extend. These elongated openings 156 allow enough space for upward and downward travel for rotatable support shafts 134a, 134b as the support assembly 144 is moved up and down as part of the dispensing and weighing cycle.

The lifting cam 158 is shown in the upper, raised position of the support assembly 154 in Figure 9, and upon the single weighing/dispensing motor 136 driving the actuator shaft 139 in the second direction, the lifting cam 158 rotates to the position shown in Figure 10 so that the support assembly 144 is in contact with the load cell 146. This is only done at the start of a dispensing cycle so that the load cell 146 is not under load when the product dispenser 110 is not in use. As shown in Figure 10, the lifting cam 158 comes out of contact with the support assembly 144 as it reaches a weighing position in contact, via the weight transfer pin 147, with the load cell 146.

Referring again to Figures 7 and 8, a position indicator 160 is preferably connected to the actuator shaft 139 and a sensor, such as a break-beam sensor 164, detects a position of the position indicator 160 and signals the controller 170. In a preferred embodiment, the position indicator 160 is a flag 162 that includes two sections which interrupt the break-beam sensor, depending upon a position of the actuator shaft 139. In Figure 8, the position indicator is shown in a ready position. Here, the support assembly 144 is out of contact with the load cell 146 prior to a dispensing operation being initiated. Once the dispensing operation is initiated, the actuator shaft 139 rotates in the second direction so that the lifting cam 158 is moved into the position shown in Figure 10 and the support assembly 144 is in contact with the load cell 146, for example via the weight transfer pin 147, so that food product that is dispensed can be weighed. A second portion of the flag 162 detects when the actuator shaft 139 rotates in the first direction to a position in which the lifting cam 158 has moved the support assembly 144 out of contact with the load cell 146 and the dump doors 132a, 132b have been opened via the actuating arm 152 contacting the dump door drive lever 140a.

The product dispenser 110 is preferably used for dispensing frozen food product, such as French fries or chicken nuggets into a receptacle, such as a fry basket 19, that is arranged below the dump doors. A sensor, such as a contact switch, proximity sensor, or break beam sensor, is positioned in each said receiving space 18 in order to detect when a fry basket 19 or other receptacle is placed into a or the respective receiving space so that the dispensing cycle can be initiated by the controller 170.

In a preferred arrangement, two of the hoppers 20a, 20b, rotatable drums 24a, 24b, and weighing/dispensing assemblies 130 are provided in the dispenser 110. However, the dispenser 110 could include only a single hopper 20a, rotatable drum 24a, and weighing assembly 130, if desired. Additionally, more than two of the dispensing arrangements including the hoppers, rotating drums, and weighing/dispensing assemblies could also be provided.

In one preferred arrangement, the dispensing cycle can include:
Activating the single weighing/dispensing motor 136 by the controller 170 to rotate the actuator shaft 139 in the second direction to move the support assembly 144 into contact with the load cell 146 to begin a dispensing cycle, which can be triggered by placement of the fry basket below the dispenser 110 to activate a dispensing cycle by the fry basket pressing a switch or otherwise being detected, which signals the controller 170 to begin a dispensing cycle;
Actuating the drive motor 28a or 28b via the controller 170 to rotate the rotatable drum 24a or 24b; receiving a signal by the controller 170 from the load cell 146 and the controller 170 determining a weight of the food product accumulating on the dump doors 132a, 132b;
Deactivating the drive motor 28a or 28b by the controller 170 upon a target weight being detected;
Activating the single weighing/dispensing motor 136 by the controller 170 to drive the actuator shaft 139, via the weighing/dispensing gear box 138, in the first direction to raise the support assembly 144 out of contact with the load cell 146 and opening the one or more dump doors 132a, 132b such that accumulated food product is dispensed; and
Activating the single weighing/dispensing motor 136 by the controller 170 to rotate the actuator shaft 139 in the second direction to close the one or more dump doors 132a, 132b. Preferably, the single weighing/dispensing motor 136 is stopped via the controller 170 when it reaches the neutral position, shown in Figure 8, so that the support assembly 144 is not in contact with the load cell 146 until a next dispensing cycle is initiated.

## Claims

1. A product dispenser (110), comprising:
a storage hopper (20a, 20b);
a rotatable drum (24a, 24b) having paddles (26a, 26b) on a periphery thereof located at a bottom of the storage hopper (20a, 20b), and a drive motor (28a, 28b) connected to the rotatable drum (24a, 24b);
a weighing/dispensing assembly (130) located beneath the rotatable drum (24a, 24b), the weighing/dispensing assembly (130) includes a load cell (146) and further includes or is connected to one or more dump doors (132a, 132b) on which product to be dispensed is adapted to accumulate, the one or more dump doors (132a, 132b) are connected to a support assembly (144) that is movable into and out of contact with the load cell (146), and;
a controller (170) configured to actuate the drive motor (28a, 28b) to rotate the rotatable drum (24a, 24b) at a start of a dispensing cycle, to receive a signal from the load cell (146) and determine a weight of the product accumulating on the dump doors (132a, 132b) and deactivate the drive motor upon a target weight being detected;
**characterized by**
a single weighing/dispensing motor (136) that drives a gearbox (138) that includes an actuator shaft (139) that upon rotation in a first direction, raises the support assembly (144) out of contact with the load cell (146) and opens the one or more dump doors (132a, 132b) such that accumulated product is dispensed, and upon rotation in a second direction, closes the one or more dump doors (132a, 132b) and upon further rotation moves the support assembly (144) into contact with the load cell (146); wherein
the controller (170) is further configured to activate the single weighing/dispensing motor (136) to drive the actuator shaft (139) in the first direction to raise the support assembly (144) out of contact with the load cell (146) and open the one or more dump doors (132a, 132b) such that the accumulated product is dispensed, and to then rotate the actuator shaft (139) in the second direction to close the one or more dump doors (132a, 132b), and the controller (170) is further configured to rotate the actuator shaft (139) in the second direction to move the support assembly (144) back into contact with the load cell (146) at a start of a next dispensing cycle.

2. The product dispenser (110) of claim 1, further comprising an actuating arm (152) connected to the actuator shaft (139), and wherein the one or more dump doors (132a, 132b) are connected to one or more rotatable support shafts (134a, 134b) that are supported by the support assembly (144), and the actuating arm (152) contacts a lever (140a, 140b) connected to at least one of the one or more rotatable support shafts (134a, 134b) to open the one or more dump doors (132a, 132b) as the single weighing/dispensing motor (136) drives the actuator shaft (139) in the first direction.

3. The product dispenser (110) of claim 2, wherein the one or more dump doors (132a, 132b) include first and second ones of the dump doors (132a, 132b) that are connected to respective first and second ones of the rotatable support shafts (134a, 134b), and a linkage arm (142) extends between the lever (140a, 140b) connected to the first rotatable shaft and a second lever connected to the second rotatable shaft (134b), such that as the actuating arm (152) contacts the lever (140a, 140b) connected to the first rotatable support shaft to open the first dump door, the linkage arm (142) acts on the second lever to open the second dump door (132a, 132b).

4. The product dispenser (110) of claim 2, wherein the support assembly (144) is slidably mounted on guides affixed to a mounting plate (131), and the mounting plate (131) includes elongated openings through which the one or more rotatable support shafts (134a, 134b) extend.

5. The product dispenser (110) of claim 1, further comprising a lifting cam (158) connected to the actuator shaft (139), the lifting cam (158) is configured to raise the support assembly (144) as the single weighing/dispensing motor (136) drives the actuator shaft (139) in the first direction.

6. The product dispenser (110) of claim 5, wherein the lifting cam (158) is configured to lower the support assembly (144) as the single weighing/dispensing motor (136) drives the actuator shaft (139) in the first direction.

7. The product dispenser (110) of claim 6, wherein the lifting cam (158) is configured to come out of contact with the support assembly (144) as the support assembly (144) reaches a weighing position in contact with the load cell (146).

8. The product dispenser (110) of claim 1, further comprising a position indicator (160) connected to the actuator shaft (139) and a sensor that detects a position of the position indicator (160) and signals the controller (170).

9. The product dispenser (110) of claim 8, wherein the position sensor is a break-beam sensor (164).

10. The product dispenser (110) of claim 1, further comprising a refrigerated housing that surrounds the hopper (20a, 20b) and the rotatable drum (24a, 24b).

## Patentansprüche

1. Produktspender (110), umfassend:
einen Vorratstrichter (20a, 20b);
eine drehbare Trommel (24a, 24b), die Schaufeln (26a, 26b) an einem Umfang davon aufweist, welche sich an einer Unterseite des Vorratstrichters (20a, 20b) befindet, und einen Antriebsmotor (28a, 28b), welcher mit der drehbaren Trommel (24a, 24b) verbunden ist;
eine Wiege/Ausgabe-Anordnung (130), welche sich unterhalb der drehbaren Trommel (24a, 24b) befindet, wobei die Wiege/Ausgabe-Anordnung (130) eine Wägezelle (146) beinhaltet und weiter eine oder mehrere Kippklappen (132a, 132b) beinhaltet oder mit diesen verbunden ist, auf welchen sich das auszugebende Produkt ansammeln kann, wobei die eine oder die mehreren Kippklappen (132a, 132b) mit einer Trägeranordnung (144) verbunden sind, welche in und außer Kontakt mit der Wägezelle (146) bewegt werden kann; und
eine Steuereinheit (170), welche dazu konfiguriert ist, den Antriebsmotor (28a, 28b) zu betätigen, um die drehbare Trommel (24a, 24b) an den Start eines Ausgabezyklus zu drehen, ein Signal von der Wägezelle (146) zu empfangen und ein Gewicht des sich auf den Kippklappen (132a, 132b) ansammelnden Produkts zu bestimmen und den Antriebsmotor zu deaktivieren, wenn ein Zielgewicht erkannt wird;
**gekennzeichnet durch**
einen einzelnen Wiege/Ausgabe-Motor (136), welcher ein Getriebe (138) antreibt, welches eine Betätigungswelle (139) beinhaltet, welche bei Drehung in eine erste Richtung die Trägeranordnung (144) außer Kontakt mit der Wägezelle (146) hebt und die eine oder die mehreren Kippklappen (132a, 132b) öffnet, sodass angesammeltes Produkt ausgegeben wird, und bei Drehung in eine zweite Richtung die eine oder die mehreren Kippklappen (132a, 132b) schließt und bei weiterer Drehung die Trägeranordnung (144) in Kontakt mit der Wägezelle (146) bewegt; wobei
die Steuereinheit (170) weiter dazu konfiguriert ist, den einzelnen Wiege/Ausgabe-Motor (136) zu aktivieren, um die Betätigungswelle (139) in die erste Richtung anzutreiben, um die Trägeranordnung (144) außer Kontakt mit der Wägezelle (146) zu heben und die eine oder die mehreren Kippklappen (132a, 132b) zu öffnen, sodass das angesammelte Produkt ausgegeben wird, und dann die Betätigungswelle (139) in die zweite Richtung zu drehen, um die eine oder die mehreren Kippklappen (132a, 132b) zu schließen, und die Steuereinheit (170) weiter dazu konfiguriert ist, die Betätigungswelle (139) in die zweite Richtung zu drehen, um die Trägeranordnung (144) zurück an einen Start eines nächsten Ausgabezyklus in Kontakt mit der Wägezelle (146) zu bewegen.

2. Produktspender (110) nach Anspruch 1, weiter einen Betätigungsarm (152) umfassend, welcher mit der Betätigungswelle (139) verbunden ist, und wobei die eine oder die mehreren Kippklappen (132a, 132b) mit einer oder mehreren drehbaren Trägerwellen (134a, 134b) verbunden sind, welche von der Trägeranordnung (144) getragen werden, und der Betätigungsarm (152) einen Hebel (140a, 140b) kontaktiert, welcher mit mindestens einer der einen oder der mehreren drehbaren Trägerwellen (134a, 134b) verbunden ist, um die eine oder die mehreren Kippklappen (132a, 132b) zu öffnen, wenn der einzelne Wiege/Ausgabe-Motor (136) die Betätigungswelle (139) in die erste Richtung antreibt.

3. Produktspender (110) nach Anspruch 2, wobei die eine oder die mehreren Kippklappen (132a, 132b) erste und zweite der Kippklappen (132a, 132b) beinhalten, welche mit jeweiligen ersten und zweiten der drehbaren Trägerwellen (134a, 134b) verbunden sind, und sich ein Gestängearm (142) zwischen dem mit der ersten drehbaren Welle verbundenen Hebel (140a, 140b) und einem mit der zweiten drehbaren Welle (134b) verbundenen zweiten Hebel erstreckt, sodass, wenn der Betätigungsarm (152) den mit der ersten drehbaren Trägerwelle verbundenen Hebel (140a, 140b) kontaktiert, um die erste Kippklappe zu öffnen, der Gestängearm (142) auf den zweiten Hebel wirkt, um die zweite Kippklappe (132a, 132b) zu öffnen.

4. Produktspender (110) nach Anspruch 2, wobei die Trägeranordnung (144) verschiebbar auf Führungen montiert ist, welche an einer Montageplatte (131) befestigt sind, und die Montageplatte (131) längliche Öffnungen beinhaltet, durch welche sich die eine oder die mehreren drehbaren Trägerwellen (134a, 134b) erstrecken.

5. Produktspender (110) nach Anspruch 1, weiter eine Hubnocke (158) umfassend, welche mit der Betätigungswelle (139) verbunden ist, wobei die Hubnocke (158) so konfiguriert ist, dass sie die Trägeranordnung (144) hebt, wenn der einzelne Wiege/Ausgabe-Motor (136) die Betätigungswelle (139) in die erste Richtung antreibt.

6. Produktspender (110) nach Anspruch 5, wobei die Hubnocke (158) so konfiguriert ist, dass sie die Trägeranordnung (144) senkt, wenn der einzelne Wiege/Ausgabe-Motor (136) die Betätigungswelle (139) in die erste Richtung antreibt.

7. Produktspender (110) nach Anspruch 6, wobei die Hubnocke (158) so konfiguriert ist, dass sie außer Kontakt mit der Trägeranordnung (144) kommt, wenn die Trägeranordnung (144) eine Wiegeposition in Kontakt mit der Wägezelle (146) erreicht.

8. Produktspender (110) nach Anspruch 1, weiter einen mit der Betätigungswelle (139) verbundenen Positionsindikator (160) und einen Sensor umfassend, welcher eine Position des Positionsindikators (160) erkennt und der Steuereinheit (170) signalisiert.

9. Produktspender (110) nach Anspruch 8, wobei der Positionssensor ein Breakbeam-Sensor (164) ist.

10. Produktspender (110) nach Anspruch 1, weiter ein gekühltes Gehäuse umfassend, welches den Trichter (20a, 20b) und die drehbare Trommel (24a, 24b) umgibt.

## Revendications

1. Distributeur de produit (110), comprenant :
une trémie de stockage (20a, 20b) ;
un tambour rotatif (24a, 24b) présentant des palettes (26a, 26b) sur une périphérie de celui-ci, situées au fond de la trémie de stockage (20a, 20b), et un moteur d'entraînement (28a, 28b) relié au tambour rotatif (24a, 24b) ;
un ensemble de pesée/distribution (130) situé sous le tambour rotatif (24a, 24b), l'ensemble de pesée/distribution (130) inclut une cellule de charge (146) et inclut en outre, ou est relié à, une ou plusieurs portes de décharge (132a, 132b) sur lesquelles le produit à distribuer est conçu pour s'accumuler, les une ou plusieurs portes de décharge (132a, 132b) sont reliées à un ensemble support (144) qui est mobile pour entrer en contact avec la cellule de charge (146) et en être privé, et ;
un dispositif de commande (170) configuré pour actionner le moteur d'entraînement (28a, 28b) pour faire tourner le tambour rotatif (24a, 24b) au début d'un cycle de distribution, pour recevoir un signal de la cellule de charge (146) et déterminer un poids du produit s'accumulant sur les portes de décharge (132a, 132b) et désactiver le moteur d'entraînement lorsqu'un poids cible est détecté ;
**caractérisé par**
un moteur unique de pesée/distribution (136) qui entraîne une transmission (138) qui inclut un arbre d'actionnement (139) qui, lors d'une rotation dans un premier sens, soulève l'ensemble support (144) afin de le priver de contact avec la cellule de charge (146) et ouvre les une ou plusieurs portes de décharge (132a, 132b) de sorte que le produit accumulé soit distribué, et lors d'une rotation dans un second sens, ferme les une ou plusieurs portes de décharge (132a, 132b) et, lors d'une rotation supplémentaire, déplace l'ensemble support (144) pour le mettre en contact avec la cellule de charge (146) ; dans lequel
le dispositif de commande (170) est en outre configuré pour activer le moteur unique de pesée/distribution (136) pour entraîner l'arbre d'actionnement (139) dans le premier sens pour soulever l'ensemble support (144) afin de le priver de contact avec la cellule de charge (146) et ouvrir les une ou plusieurs portes de décharge (132a, 132b) de telle sorte que le produit accumulé soit distribué, puis pour faire tourner l'arbre d'actionnement (139) dans le second sens pour fermer les une ou plusieurs portes de décharge (132a, 132b), et le dispositif de commande (170) est en outre configuré pour faire tourner l'arbre d'actionnement (139) dans le second sens pour déplacer l'ensemble support (144) afin de le remettre en contact avec la cellule de charge (146) au début d'un cycle de distribution suivant.

2. Distributeur de produit (110) selon la revendication 1, comprenant en outre un bras d'actionnement (152) relié à l'arbre d'actionnement (139), et dans lequel les une ou plusieurs portes de décharge (132a, 132b) sont reliées à un ou plusieurs arbres de support rotatifs (134a, 134b) qui sont supportés par l'ensemble support (144), et le bras d'actionnement (152) entre en contact avec un levier (140a, 140b) relié à au moins l'un des arbres de support rotatifs (134a, 134b) pour ouvrir les une ou plusieurs portes de décharge (132a, 132b) lorsque le moteur unique de pesée/distribution (136) entraîne l'arbre de l'actionneur (139) dans le premier sens.

3. Distributeur de produit (110) selon la revendication 2, dans lequel les une ou plusieurs portes de décharge (132a, 132b) incluent une première et une seconde porte de décharge (132a, 132b) qui sont reliées à un premier et un second arbre de support rotatif respectif (134a, 134b), et un bras de liaison (142) s'étend entre le levier (140a, 140b) relié au premier arbre rotatif et un second levier relié au second arbre rotatif (134b), de telle sorte que lorsque le bras d'actionnement (152) entre en contact avec le levier (140a, 140b) relié au premier arbre de support rotatif pour ouvrir la première porte de décharge, le bras de liaison (142) agisse sur le second levier pour ouvrir la seconde porte de décharge (132a, 132b).

4. Distributeur de produit (110) selon la revendication 2, dans lequel l'ensemble support (144) est monté de manière coulissante sur des guides fixés à une plaque de montage (131), et la plaque de montage (131) inclut des ouvertures allongées à travers lesquelles s'étendent les un ou plusieurs arbres de support rotatifs (134a, 134b).

5. Distributeur de produit (110) selon la revendication 1, comprenant en outre une came de levage (158) reliée à l'arbre d'actionnement (139), la came de levage (158) est configurée pour soulever l'ensemble support (144) lorsque le moteur unique de pesée/distribution (136) entraîne l'arbre de l'actionneur (139) dans le premier sens.

6. Distributeur de produit (110) selon la revendication 5, dans lequel la came de levage (158) est configurée pour abaisser l'ensemble support (144) lorsque le moteur unique de pesée/distribution (136) entraîne l'arbre d'actionnement (139) dans le premier sens.

7. Distributeur de produit (110) selon la revendication 6, dans lequel la came de levage (158) est configurée pour être privée de contact avec l'ensemble support (144) lorsque l'ensemble support (144) atteint une position de pesée en contact avec la cellule de charge (146).

8. Distributeur de produit (110) selon la revendication 1, comprenant en outre un indicateur de position (160) relié à l'arbre d'actionnement (139) et un capteur qui détecte une position de l'indicateur de position (160) et signale le dispositif de commande (170).

9. Distributeur de produit (110) selon la revendication 8, dans lequel le capteur de position est un capteur à faisceau de rupture (164).

10. Distributeur de produit (110) selon la revendication 1, comprenant en outre un boîtier réfrigéré qui entoure la trémie (20a, 20b) et le tambour rotatif (24a, 24b).
